# EUROPEAN PATENT APPLICATION

(11) **EP 4 597 595 A1**
(43) Date of publication of application: **06.08.2025**
(21) Application number: 24213953.3
(22) Date of filing: 19.11.2024
(51) Int. Cl.: H01M 4/04, H01M 10/04, H01M 10/0587, H01M 50/107, H01M 50/152, H01M 50/46

(54) **ELECTRODE ASSEMBLY AND SECONDARY BATTERY INCLUDING THE SAME**

(30) Priority: 05.02.2024 KR 20240017225
(71) Applicant: SAMSUNG SDI CO., LTD., Yongin-si, Gyeonggi-do 17084 (KR)
(72) Inventor: Wi, Jae Woong, Yongin-si, Gyeonggi-do 17084 (KR)
(74) Representative: Gulde & Partner

(57) **Abstract**

An electrode assembly (100) including: a first electrode plate (110) including a first electrode substrate (111) having a first electrode active material layer (112) thereon; a first separator (120); a second electrode plate (130) including a second electrode substrate (131) having a second electrode active material layer (132) thereon; and a second separator (140). The first electrode plate (110), the first separator (120), the second electrode plate (130), and the second separator (140) are sequentially stacked and wound about a winding axis, and the first electrode substrate (111), the first separator (120), and the second separator (140) extend at least one turn beyond a distal end (130a) of the second electrode plate (130) in the wound electrode assembly (100).

## Description

### BACKGROUND

### 1. Field

Aspects of embodiments of the present disclosure relate to an electrode assembly and a secondary battery including the same.

### 2. Description of the Related Art

Lithium ion secondary batteries are widely used as power sources of hybrid vehicles and electric vehicles as well as of portable electronic devices due to their relatively high operating voltage and relatively high energy density per unit weight.

Secondary batteries may be classified as a cylindrical type, a prismatic type, and a pouch type secondary battery. For example, a cylindrical secondary battery generally includes a can having a cylindrical shape, an electrode assembly wound in a cylindrical shape and inserted into the can, an electrolyte injected into the can, and a cap assembly coupled to the can.

During charging/discharging, the electrode assembly may be undesirably deformed due to expansion of an electrode plate, which may lead to cracking.

The information disclosed in this section is provided for enhancement of understanding of the background of the present disclosure, and therefore, it may contain information that does not form the related (or prior) art.

### SUMMARY

The invention is defined by the appended claims. The description that follows is subjected to this limitation. Any disclosure lying outside the scope of said claims is only intended for illustrative as well as comparative purposes.

Embodiments of the present disclosure provide an electrode assembly exhibiting improved safety and a secondary battery including the same.

An electrode assembly, according to an embodiment of the present disclosure, includes a first electrode plate including a first electrode substrate having a first electrode active material layer thereon, a first separator, a second electrode plate including a second electrode substrate having a second electrode active material layer thereon, and a second separator. The first electrode plate, the first separator, the second electrode plate, and the second separator are sequentially stacked and wound about a winding axis, and the first electrode substrate, the first separator, and the second separator extend at least one turn (or 360°) beyond a distal end of the second electrode plate.

In other words, in a wound state, the first electrode substrate, the first separator and the second separator overlap the second electrode plate so that the overlapping components extend over the distal end of the second electrode plate by at least one complete winding around the winding axis. The first electrode substrate, the first separator, and the second separator may thus have such a length that a corresponding overlap or extend is achieved irrespective of a number of the respective windings, a winding radius, a thickness of the respective components, the winding density and similar parameters. Conversely, the aforementioned parameters may also influence the extension, whereby ultimately in both of the aforementioned cases a selection is made such that the first electrode substrate, the first separator, and the second separator extend at least one turn (or 360°) beyond a distal end of the second electrode plate.

In the present disclosure, ends of each of the first electrode plate, the first electrode substrate, the first electrode active material layer, the first separator, the second electrode plate, the second electrode substrate, the second electrode active material layer, and the second separator that are close to the winding axis, for example, each of the ends thereof that are located at the central portion of the electrode assembly, may be referred to as a proximal end, and ends of each of the first electrode plate, the first electrode substrate, the first electrode active material layer, the first separator, the second electrode plate, the second electrode substrate, the second electrode active material layer, and the second separator that are far away from the winding axis, for example, each of ends thereof that are located at the peripheral portion of the electrode assembly, may be referred to as a distal end.

The first electrode substrate, the first separator, and/or the second separator may extend about 1 to about 1.5 turns beyond the distal end of the second electrode plate. The said components may extent about 1.1 to 1.4 or 1.2 to 1.3 turns.

The first electrode substrate, the first separator, and the second separator may extend about 1 to about 1.5 turns beyond the distal end of the second electrode plate.

The first electrode substrate, the first separator, and/or the second separator may extend about 360° to about 540° beyond the distal end of the second electrode plate. The said components may extent about 390° to 490° or 420° to 460°.

The first electrode substrate, the first separator, and the second separator may extend about 360° to about 540° beyond the distal end of the second electrode plate.

The first electrode substrate may extend beyond distal ends of the first and second separators.

The first electrode substrate may extend about 0.5 turns or less beyond the distal ends of the first and second separators.

The first electrode substrate may extend about 0.4 turns, 0.3 turns or less beyond the distal ends of the first and second separators.

The first electrode substrate may extend about 180° or less beyond the distal ends of the first and second separators.

The first electrode substrate may extend about 145°, 110° or less beyond the distal ends of the first and second separators.

A distal end of the second electrode active material layer may coincide with a distal end of the second electrode substrate.

As used herein, the term "coincide" may be intended to mean not only perfect coincidence but also substantial coincidence and should be interpreted as encompassing embodiments in which one element is slightly longer or slightly shorter than another element due to an error or deviation in a winding process or other manufacturing processes.

In the present disclosure, coincide may mean that the corresponding coinciding components with respect to a starting point defined for both components with respect to the first electrode plate, the first separator, the second electrode plate, and the second separator sequentially stacked and wound about the winding axis end at a location having the same angle. The angle may be between 0° and 360°, whereby the angles of the last winding of each of the corresponding coinciding components correspond to each other. The angle can also be calculated from the start of the winding of the corresponding coinciding components, whereby this then increases continuously with each partial winding. In the present disclosure, coincide may include a tolerance range so that the above conditions may include deviations. The deviations or tolerance ranges may be less than ± 15°, less than ± 10° or less than ± 5°. The deviations or tolerance ranges can be less than ± 5%, less than ± 2.5% or less than ± 1%.

A distal end of the first electrode active material layer may coincide with a the distal end of the second electrode active material layer.

The first electrode active material layer may extend about 5 mm to about 15 mm beyond the distal end of the second electrode plate.

The first electrode active material layer may extend about 7 mm to about 13 or 9 mm to 11 mm beyond the distal end of the second electrode plate.

The second electrode active material layer may be on both surfaces of the second electrode substrate.

The first electrode active material layer may be on both surfaces of the first electrode substrate, and, in the last turn section, the first electrode active material layer may be on only one surface of the first electrode substrate facing the inside of the electrode assembly.

In the present disclosure, last section may mean the last winding of the respective components, i.e. an end of the respective component, which is the end that is further away from the winding axis.

The first electrode active material layer may be on both surfaces of the first electrode substrate, and, in the last 360° section, the first electrode active material layer may be on one only surface of the first electrode substrate facing the inside of the electrode assembly.

The distal end of the first separator may coincide with the distal end of the second separator.

The first electrode substrate, the first separator, the second separator, and the first electrode substrate may be sequentially arranged in that order from the outside when viewed in longitudinal section passing through the winding axis and the distal ends of the first and second separators in a portion of the electrode assembly.

The second electrode plate may be surrounded by the first electrode substrate, the first separator, and the second separator. In other words, an outer surface of the electrode assembly may be formed by the first electrode substrate, the first separator, and the second separator, which cover second electrode plate.

The outer circumferential surface of the electrode assembly may be surrounded by the first electrode substrate. In other words, an outer surface of the electrode assembly may be formed by the first electrode substrate,, which covers the first separator, the second separator, and the second electrode plate.

The electrode assembly may further include a finishing tape configured to fix the distal end of the first electrode substrate.

The finishing tape may include polyethylene terephthalate (PET).

The finishing tape may have a thickness in a range of about 15 µm to about 20 µm.

The finishing tape may be attached to at least one of an upper portion, a lower portion, or a middle portion of the electrode assembly.

A secondary battery, according to an embodiment of the present disclosure, includes the electrode assembly as described above, a case accommodating the electrode assembly and electrically connected to the first electrode plate of the electrode assembly, a cap coupled to the case, and a terminal electrically connected to the second electrode plate of the electrode assembly.

### BRIEF DESCRIPTION OF THE DRAWINGS

The accompanying drawings, which are incorporated in this specification, illustrate embodiments of the present disclosure and further illustrate aspects and features of the present disclosure in conjunction with the detailed description that follows. The present disclosure is not to be construed as limited to what is shown in the drawings. In the drawings:
FIG. 1 is a schematic view of an electrode assembly according to an embodiment;
FIG. 2 is a schematic cross-sectional view of the electrode assembly shown in FIG. 1;
FIG. 3 is a schematic longitudinal cross-sectional view of the electrode assembly shown in FIG. 2;
FIG. 4 is a schematic view of a first electrode plate, a first separator, a second electrode plate, and a second separator of the electrode assembly shown in FIGS. 1-3;
FIG. 5 is a schematic view of a secondary battery including an electrode assembly according to an embodiment; and
FIG. 6 is a schematic cross-sectional view of a secondary battery including an electrode assembly according to another embodiment.

### DETAILED DESCRIPTION

Hereinafter, embodiments of the present disclosure will be described, in detail, with reference to the accompanying drawings.

Embodiments are provided to more fully illustrate the aspects and features of the present disclosure to a person having ordinary skill in the art, and the following embodiments may be modified in various other forms. The scope of the present disclosure is not limited to the following embodiments. These embodiments are provided to make the present disclosure more faithful and complete and to completely convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

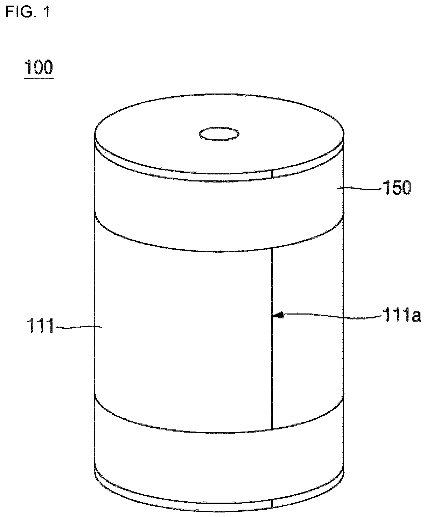

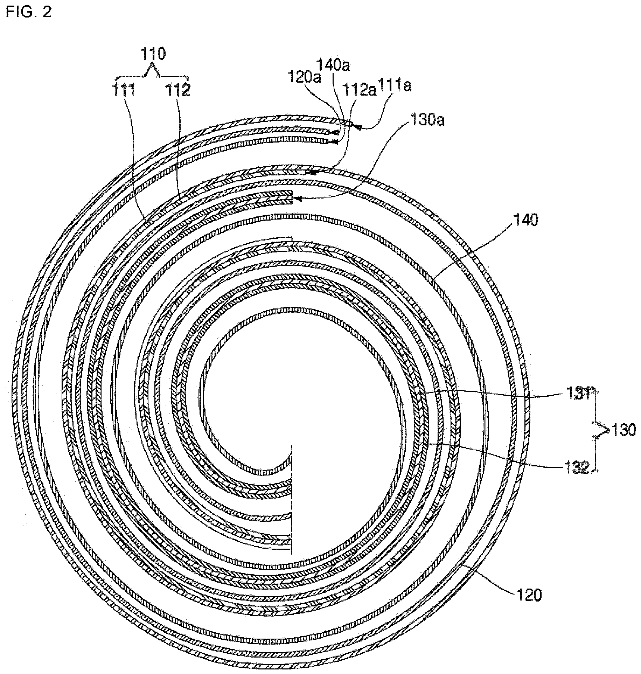

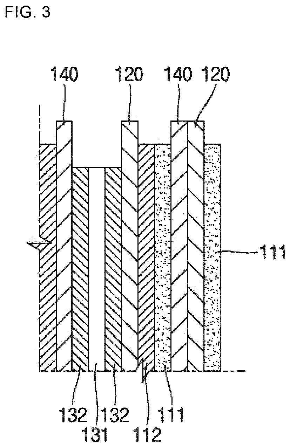

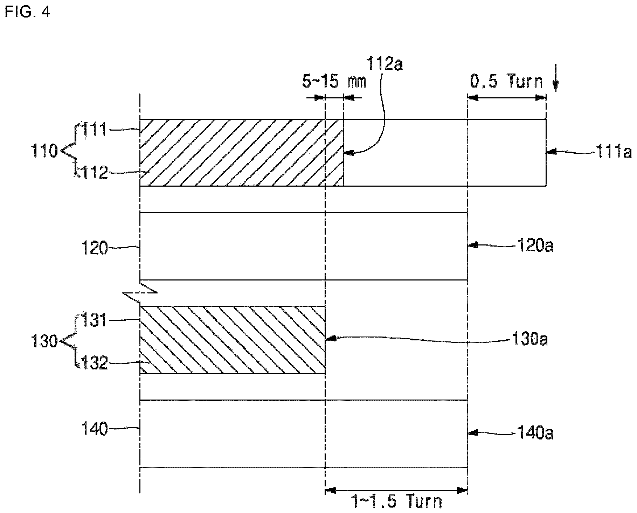

FIG. 1 is a schematic view of an electrode assembly 100 according to an embodiment. FIG. 2 is a schematic cross-sectional view of the electrode assembly 100 shown in FIG. 1. The cross-section shown in FIG. 2 is a cross-section cut along a plane perpendicular to a winding axis of the electrode assembly 100. For convenience of description, illustration of a part of a central portion of the electrode assembly and a finishing tape 150 is omitted. FIG. 3 is a schematic longitudinal cross-sectional view of the electrode assembly 100 shown in FIG. 2. The longitudinal cross-sectional shown in FIG. 3 is a longitudinal cross-sectional cut along a plane passing through the winding axis of the electrode assembly 100 and distal ends 120a and 140a of first and second separators 120 and 140 of the electrode assembly 100. For convenience of description, only a peripheral portion of the electrode assembly is illustrated, and illustration of the finishing tape 150 is omitted. FIG. 4 is a schematic view of a first electrode plate 110, a first separator 120, a second electrode plate 130, and a second separator 140 of the electrode assembly 100 shown in FIGS. 2 and 3. For convenience of description, only the distal end portions of the above components are illustrated.

It should be understood that the types, shapes, structures, etc. of components shown in the drawings do not reflect the actual types, shapes, structures, etc. thereof, and the sizes, positions, proportions, etc. thereof may be exaggerated or distorted for convenience of description.

Referring to FIGS. 1 to 4, the electrode assembly 100 according to an embodiment may include a first electrode plate 110, a first separator 120, a second electrode plate 130, a second separator 140, and a finishing tape 150.

The first electrode plate 110 may be any one of a negative electrode plate and a positive electrode plate. Hereinafter, the first electrode plate 110 will be described as being a negative electrode plate as an example.

The first electrode plate 110 may include a first electrode substrate 111 formed as a conductive metal thin plate, for example, as a copper or nickel foil or mesh, having a first electrode active material layer 112 formed thereon by coating a first electrode active material on the first electrode substrate 111.

A portion of the first electrode substrate 111 on which the first electrode active material layer 112 is not formed (or coated) may be referred to as a first electrode uncoated portion and may act as a passage for flow of current from the first electrode plate 110 to the outside. In some embodiments, the first electrode uncoated portion may be located at a proximal end of the first electrode substrate 111, may be disposed along an upper end and/or a lower end of the first electrode substrate 111, or may be located in the middle of the first electrode substrate 111.

The first electrode active material may include, for example, a carbon-based material, Si, Sn, tin oxide, a tin alloy composite, a transition metal oxide, lithium metal nitrite, or a metal oxide.

The first separator 120 may be interposed between the first electrode plate 110 and the second electrode plate 130 to prevent electrical short circuit between the first electrode plate 110 and the second electrode plate 130.

The first separator 120 may be made of, for example, polyethylene, polypropylene, or a porous copolymer of polyethylene and polypropylene.

The second electrode plate 130 may be the other of the negative electrode plate and the positive electrode plate. Hereinafter, the second electrode plate 130 will be described as being the positive electrode plate as an example.

The second electrode plate 130 may include a second electrode substrate 131 formed as a conductive metal thin plate, for example, as an aluminum foil or mesh, and a second electrode active material layer 132 formed by coating a second electrode active material on the second electrode substrate 131.

A portion of the second electrode substrate 131 on which the second electrode active material layer 132 is not formed may be referred to as a second electrode uncoated portion and may act as a passage for flow of current from the second electrode plate 130 to the outside. In some embodiments, the second electrode uncoated portion may be located at a proximal end of the second electrode substrate 131, may be disposed along a lower end and/or an upper end of the second electrode substrate 131, or may be located in the middle of the second electrode substrate 131.

The second electrode active material may include a chalcogenide compound, for example, a composite metal oxide, such as LiCoOz, LiMn₂O₄, LiNiO₂, or LiNiMnO₂.

The second separator 140 may be interposed between the first electrode plate 110 and the second electrode plate 130 to prevent electrical short circuit between the first electrode plate 110 and the second electrode plate 130.

The second separator 140 may be made of, for example, polyethylene, polypropylene, or a porous copolymer of polyethylene and polypropylene.

The first electrode plate 110, the first separator 120, the second electrode plate 130, and the second separator 140 may be sequentially stacked and wound about a common axis (e.g., a winding axis). In the specification, ends of each of the first electrode plate 110, the first separator 120, the second electrode plate 130, and the second separator 140 that are close to the winding axis, for example, each of the ends thereof that are located at the central portion of the electrode assembly 100, will be referred to as a proximal end, and ends of each of the first electrode plate 110, the first separator 120, the second electrode plate 130, and the second separator 140 that are far away from the winding axis, for example, each of ends thereof that are located at the peripheral portion of the electrode assembly 100, will be referred to as a distal end.

As can be seen in FIGS. 2 and 4, the second electrode active material layer 132 may be formed up to the distal end of the second electrode substrate 131. For example, the distal end of the second electrode active material layer 132 may coincide with (or may be collocated with) the distal end of the second electrode substrate 131, and the coincidence point may be the distal end 130a of the second electrode plate 130.

The second electrode active material layer 132 may be formed on both surfaces of the second electrode substrate 131. For example, the second electrode active material layer 132 may be formed on one surface of the second electrode substrate 131 that faces the inside of the electrode assembly 100 and the other surface of the second electrode substrate 131 that faces the outside of the electrode assembly 100.

As can be seen in FIGS. 2 and 4, the distal end 112a of the first electrode active material layer 112 may coincide with or may extend to be slightly longer by, for example, a range of about 5 mm to about 15 mm, than a point thereof corresponding to the distal end 130a of the second electrode plate 130 (e.g., the point at which a straight line that is perpendicular to the winding axis and passes through the winding axis and the distal end 130a of the second electrode plate 130 crossed the first electrode active material layer 112 immediately adjacent to the distal end 130a of the second electrode plate 130 in the outward direction of the electrode assembly 100). As used herein, the term "coincide" is intended to mean not only perfect coincidence but also substantial coincidence and should be interpreted as encompassing embodiments in which one element is slightly longer or slightly shorter than another element due to an error or deviation in a winding process or other manufacturing processes. The first electrode active material layer 112 is illustrated in the drawings as extending to be slightly longer than the point thereof corresponding to the distal end 130a of the second electrode plate 130 (e.g., as extending slightly beyond the distal end 130a of the second electrode plate 130).

The first electrode active material layer 112 may be formed on both surfaces of the first electrode substrate 111. However, as can be seen in FIG. 2, in the last turn section (e.g., having an angular length of 360°) of the first electrode active material layer 112, only one surface of the first electrode substrate 111 that faces the inside of the electrode assembly 100 may face and electrochemically interact with the second electrode active material layer 132. Therefore, in the last turn section (360°) of the first electrode active material layer 112, the first electrode active material layer 112 may be formed only on one surface of the first electrode substrate 111 that faces the inside of the electrode assembly 100 and may not be formed on the other surface of the first electrode substrate 111 that faces the outside of the electrode assembly 100.

As can be seen in FIGS. 2 and 4, the first electrode substrate 111 may extend to be longer than (e.g., may extend beyond or may extend past) the distal end 112a of the first electrode active material layer 112. For example, the first electrode substrate 111, the first separator 120, and the second separator 140 may extend to be longer by at least one turn (360°) than points thereof corresponding to the distal end 130a of the second electrode plate 130 (e.g., the point at which a straight line that is perpendicular to the winding axis and passes through the winding axis and the distal end 130a of the second electrode plate 130 crosses the first electrode substrate 111 immediately adjacent to the distal end 130a of the second electrode plate 130 in the outward direction of the electrode assembly 100, the point at which a straight line that is perpendicular to the winding axis and passes through the winding axis and the distal end 130a of the second electrode plate 130 crosses the first separator 120 immediately adjacent to the distal end 130a of the second electrode plate 130 in the outward direction of the electrode assembly 100, and the point at which a straight line that is perpendicular to the winding axis and passes through the winding axis and the distal end 130a of the second electrode plate 130 crosses the second separator 140 immediately adjacent to the distal end 130a of the second electrode plate 130 in the inward direction of the electrode assembly 100, respectively). For example, the first electrode substrate 111, the first separator 120, and the second separator 140 may extend to be further wound by at least one turn (360°) from the points thereof corresponding to the distal end 130a of the second electrode plate 130. Therefore, the second electrode plate 130 may be completely surrounded by the first electrode substrate 111, the first separator 120, and the second separator 140.

However, if the first electrode substrate 111, the first separator 120, and the second separator 140 extend excessively (e.g., extend excessively beyond the distal end 130a of the second electrode plate 130), the capacity per volume of the secondary battery may be reduced. Therefore, the first electrode substrate 111, the first separator 120, and the second separator 140 may extend to be longer by about 1.5 turns (e.g., having an angular length of 540°) or less than the points thereof corresponding to the distal end 130a of the second electrode plate 130.

As a result, the first electrode substrate 111, the first separator 120, and the second separator 140 may extend to be longer by about 1 to about 1.5 turns (about 360° to about 540°) than the points thereof corresponding to the distal end 130a of the second electrode plate 130.

As can be seen in FIGS. 2 and 4, the distal end 120a of the first separator 120 may coincide with a point thereof corresponding to the distal end 140a of the second separator 140 (e.g., the point at which a straight line that is perpendicular to the winding axis and passes through the winding axis and the distal end 140a of the second separator 140 crosses the first separator 120 immediately adjacent to the distal end 140a of the second separator 140 in the outward direction of the electrode assembly 100). As used herein, the term "coincide" is intended to mean not only perfect coincidence but also substantial coincidence and should be interpreted as encompassing an embodiment in which one element is slightly longer or slightly shorter than another element due to an error or deviation in a winding process or other manufacturing processes.

Furthermore, as can be seen in FIGS. 2 and 4, the first electrode substrate 111 may extend to be longer than (e.g., may extend beyond) a point thereof corresponding to the distal ends 120a and 140a of the first and second separators 120 and 140 (e.g., the point at which a straight line that is perpendicular to the winding axis and passes through the winding axis and the distal ends 120a and 140a of the first and second separators 120 and 140 crosses the first electrode substrate 111 immediately adjacent to the distal ends 120a and 140a of the first and second separators 120 and 140 in the outward direction of the electrode assembly 100). Therefore, the outer circumferential surface of the electrode assembly 100 may be completely surrounded by the first electrode substrate 111.

However, if the first electrode substrate 111 extends excessively, the capacity per volume of the secondary battery may be reduced. Therefore, the first electrode substrate 111 may extend to be longer by about 0.5 turns (e.g., an angular length of about 180°) or less than the point thereof corresponding to the distal ends 120a and 140a of the first and second separators 120 and 140.

As can be seen in FIG. 3, the electrode assembly 100 described above may have a section in which the first electrode substrate 111, the first separator 120, the second separator 140, and the first electrode substrate 111 are arranged in that order from the outside when viewed in longitudinal section passing through the winding axis and the distal ends 120a and 140a of the first and second separators 120 and 140.

Because the electrode assembly 100 is additionally surrounded by, and protected by, the first electrode substrate 111 and the first and second separators 120 and 140 from the outside, even when the electrode plates expand during charging/discharging such that pressure is applied thereto from the outside, the first electrode active material layer 112 and the second electrode active material layer 132 located relatively inward of the electrode assembly 100 may not crack.

Furthermore, because heat or impact applied from the outside is absorbed by the first electrode substrate 111 and the first and second separators 120 and 140, safety may be improved. Furthermore, because the first and second separators 120 and 140 may be impregnated with the electrolyte in the peripheral area, a passage for movement of the electrolyte may be provided, and therefore, the electrolyte may be prevented from collecting in the peripheral area.

The finishing tape 150 may fix the distal end 111a of the first electrode substrate 111 in order to prevent release thereof.

The finishing tape 150 may be made of, for example, polyethylene terephthalate (PET), and may have a thickness in a range of about 15 µm to about 20 µm. Compared to a conventional example using a relatively thick oriented polystyrene (OPS) film having a thickness of about 30 µm to prevent or minimize cracking, embodiments of the present disclosure may avoid an increase in volume and cost due to the finishing tape 150.

The finishing tape 150 is illustrated in the drawings as being attached to the upper and lower portions of the electrode assembly 100. In some embodiments, however, the finishing tape 150 may be attached to the middle of the electrode assembly 100 or may be attached over a large area between the upper portion and the lower portion of the electrode assembly 100.

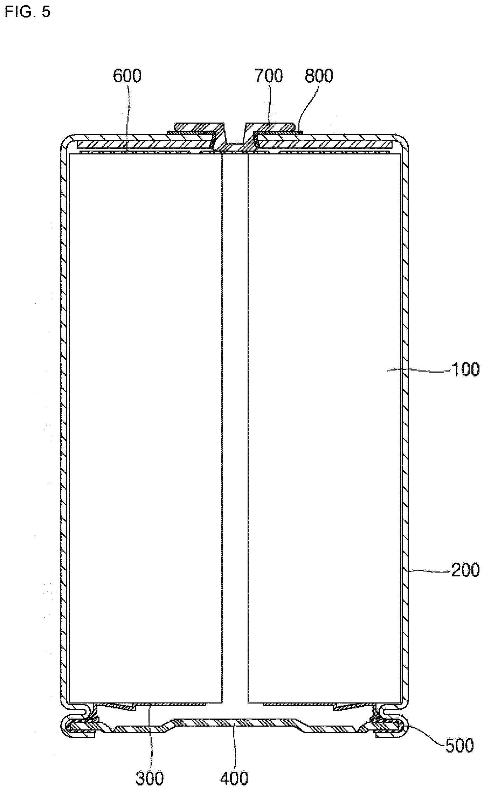

FIG. 5 is a schematic view of a secondary battery including the electrode assembly 100 as described above. However, the secondary battery shown in FIG. 5 is merely one example of various types of secondary batteries that may use or incorporate the electrode assembly 100 as described above.

Referring to FIG. 5, the secondary battery may include an electrode assembly 100, a case 200, a first current collector 300, a cap plate (or cap) 400, a first gasket 500, a second current collector 600, a terminal 700, and a second gasket 800.

The configuration of the electrode assembly 100 is the same as described above, and thus, a duplicate description thereof will be omitted.

The case 200 may have a cylindrical shape. For example, the case 200 may have an upper surface formed in a circular plate shape and a side surface extending downwardly from an edge of the upper surface. The case 200 may have an open lower surface (or lower end). The electrode assembly 100 may be inserted into the case 200 through the open lower surface of the case 200 together with an electrolyte, and then, the lower surface of the case 200 may be blocked (e.g., sealed) by the cap plate 400. The electrolyte may be a non-aqueous organic electrolyte that is a mixture of lithium salt and a high-purity organic solvent. In other embodiments, the electrolyte may be a polymer using a polymer electrolyte or may be a solid electrolyte.

The upper surface and the side surface of the case 200 may be integrally formed with each other. The case 200 may be made of, for example, steel, a steel alloy, aluminum, or an aluminum alloy.

The case 200 may have a through-hole formed through the upper surface thereof to allow the terminal 700 to be mounted therein.

The case 200 may have a beading portion and a crimping portion formed at the side surface thereof. The beading portion may fix the electrode assembly 100 and provide seat for the cap plate 400 to sit thereon and may be formed by concavely depressing a lower portion of the side surface of the case 200 inwardly. The crimping portion may fix the cap plate 400 and may be formed by bending the lower end of the side surface of the case 200 inwardly to cover the edge of the cap plate 400.

The first current collector 300 may electrically connect the first electrode plate 110 of the electrode assembly 100 to the case 200. To this end, the first current collector 300 may be welded to the first electrode uncoated portion of the first electrode plate 110 of the electrode assembly 100 and to the case 200. For example, the first current collector 300 may include a flat portion formed in a shape corresponding to the lower surface of the electrode assembly 100 and an extension portion extending outwardly and downwardly from the flat portion. The flat portion may be in contact with the first electrode uncoated portion of the first electrode plate 110 of the electrode assembly 100 and may be fixed and electrically connected thereto by, for example, welding. The extension portion may be in contact at the edge thereof with the beading portion of the case 200 and may be fixed and electrically connected thereto through, for example, welding. The edge of the extension portion may be interposed and fixed between the beading portion of the case 200 and the first gasket 500.

The cap plate 400 may be coupled to the lower surface of the case 200. For example, in a state in which (e.g., after) the electrode assembly 100 is accommodated in the case 200, the lower portion of the side surface of the case 200 may be concavely depressed inwardly to form the beading portion, the cap plate 400 may be seated on the beading portion, and the lower end of the side surface of the case 200 may be bent inwardly to form the crimping portion together with the first gasket 500 to cover the edge of the cap plate 400. In this way, the cap plate 400 may be mounted to the case 200.

The cap plate 400 may have a notch that acts as a safety vent. If gas is generated due to abnormal operation of the secondary battery such that the internal pressure therein reaches a reference (e.g., predetermined) pressure or higher, the cap plate 400 may be cut (e.g., may burst) along the notch by the pressure to be opened, thereby discharging the gas and, thus, preventing an explosion of the secondary battery.

The first gasket 500 may be disposed between the case 200 and the cap plate 400 and may prevent leakage of the electrolyte to the outside or introduction of foreign substances (e.g., moisture or dust) into the case 200. The first gasket 500 may be made of, for example, polypropylene (PP), polyethylene (PE), ethylene propylene diene monomer (EPDM), or nitrile butadiene rubber (NBR).

The second current collector 600 may be disposed between the second electrode plate 130 of the electrode assembly 100 and the terminal 700 and may electrically connect the second electrode plate 130 to the terminal 700. To this end, the second current collector 600 may be formed in a shape corresponding to the upper surface of the electrode assembly 100. One side of the second current collector 600 may be in contact with the second electrode uncoated portion of the second electrode plate 130 of the electrode assembly 100 and may be fixed and electrically connected thereto by, for example, welding, and the opposite side of the second current collector 600 may be in contact with the terminal 700 and may be fixed and electrically connected thereto by, for example, welding. The second current collector 600 may be made of, for example, aluminum.

The terminal 700 may be mounted in the through-hole formed through the upper surface of the case 200. For example, the terminal 700 may be mounted in a riveting manner (e.g., the terminal 700 may be a rivet and/or may be riveted to the case 200). For example, the terminal 700 may be inserted into the through-hole from the outside of the case 200, and then, a portion (e.g., an inner portion) of the terminal 700 inserted into the case 200 may be deformed to have a larger diameter than the through-hole to be supported and fixed by the inner surface of the upper surface of the case 200. In such an embodiment, the portion of the terminal 700 located outside the case 200 may be formed to have a larger diameter than the through-hole and, thus, may be supported by the outer surface of the upper surface of the case 200. In other embodiments, the terminal 700 may be inserted into the through-hole from the inside of the case 200, and then, the portion of the terminal 700 protruding outside may be deformed to have a larger diameter than the through-hole and, thus, may be supported and fixed by the outer surface of the upper surface of the case 200. In such an embodiment, a portion (e.g., an inner portion) of the terminal 700 located in the case 200 may be formed to have a larger diameter than the through-hole and, thus, may be supported by the inner surface of the upper surface of the case 200.

The inner portion of the terminal 700 may be welded to the second current collector 600.

The second gasket 800 may be disposed between the case 200 and the terminal 700 and may electrically insulate the case 200 and the terminal 700 from each other and prevent leakage of the electrolyte to the outside or introduction of foreign substances (e.g., moisture or dust) into the case 200. The second gasket 800 may be made of, for example, PP, PE, or PET.

As described above, the cylindrical secondary battery is merely one example of various types of secondary batteries that are capable of being constructed using the electrode assembly 100 as described herein, and those skilled in the art may apply the electrode assembly 100 to various types of secondary batteries.

For example, different from the secondary battery shown in FIG. 5, according to another embodiment, the cap plate 400 may be directly welded to the case 200 rather than being fixed by the beading portion and the crimping portion of the case 200.

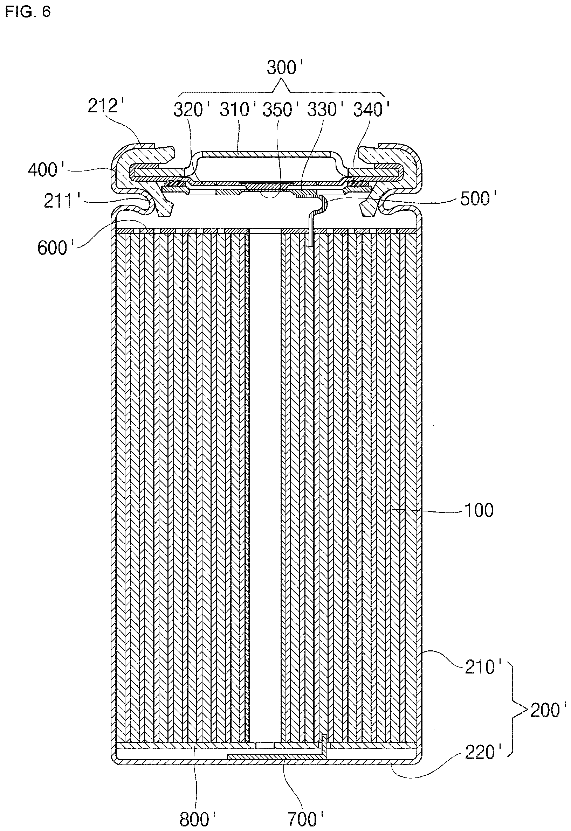

FIG. 6 is a schematic view of a secondary battery according to another embodiment including the electrode assembly 100.

The configuration of the electrode assembly 100 shown in FIG. 6 is the same as that described above, and thus, a duplicate description thereof will be omitted.

A case 200' may accommodate the electrode assembly 100 and an electrolyte and may define the external appearance of the secondary battery together with a cap assembly 300'. The case 200' may have a body portion 210' having a substantially cylindrical shape and a bottom portion 220' connected at one side of the body portion 210'. The case 200' may have a beading portion 211' as an inwardly deformed portion of the body portion 210' and a crimping portion 212' inwardly bent at an end portion of an opening in the body portion 210'.

The beading portion 211' may suppress movement of the electrode assembly 100 in the case 200' and may facilitate seating of a gasket 400' and the cap assembly 300'. The crimping portion 212' may press the edge of the cap assembly 300' via the gasket 400' to firmly fix the cap assembly 300' to the case 200'. The case 200' may be made of, for example, steel plated with nickel.

The cap assembly 300' may be fixed to the inner side of the crimping portion 212' via the gasket 400' to seal the case 200'. The cap assembly 300' may include a cap-up 310', a safety vent 320', a cap-down 330', an insulating member 340', and a sub-plate 350'. However, embodiments are not limited thereto. The cap assembly 300' may be modified to have any of various other suitable configurations.

The cap-up 310' may be located at (or may form) the highest position in the cap assembly 300'. The cap-up 310' may include a terminal portion convexly protruding upwardly to be connected to an external circuit and may have a discharge hole for discharge of gas around the terminal portion.

The safety vent 320' may be located below the cap-up 310'. The safety vent 320' may have a protruding portion convexly protruding downwardly to be connected to the sub-plate 350' and at least one notch located around the protruding portion.

If gas is generated due to overcharging or abnormal operation of the secondary battery, the protruding portion of the safety vent 320' may be deformed upwardly by pressure and may be separated from the sub-plate 350' and the safety vent 320' may be cut along the notch (e.g., the safety vent 320' may burst). The cut safety vent 320' may discharge the gas to the outside, thereby preventing an explosion of the secondary battery.

The cap-down 330' may be located below the safety vent 320'. The cap-down 330' may have an exposure opening through which the protruding portion of the safety vent 320' is exposed and a gas discharge opening for discharge of gas. The insulating member 340' may be located between the safety vent 320' and the cap-down 330' to insulate the safety vent 320' and the cap-down 330' from each other.

The sub-plate 350' may be located below the cap-down 330'. The sub-plate 350' may be fixed to the lower surface of the cap-down 330' to block the exposure opening in the cap-down 330', and the protruding portion of the safety vent 320' may be fixed to the sub-plate 350'. A first lead tab 500' led out from (or extending from) the electrode assembly 100 may be fixed to the sub-plate 350'. Therefore, the cap-up 310', the safety vent 320', the cap-down 330', and the sub-plate 350' may be electrically connected to the first electrode of the electrode assembly 100.

A first insulating plate 600' may be located below the beading portion 211' to be in contact with the electrode assembly 100, and the first insulating plate 600' may have a tab opening through which the first lead tab 500' is led out. The cap assembly 300' is electrically connected to the first electrode via the first lead tab 500' and may face the electrode assembly 100 with the first insulating plate 600' interposed therebetween. The first insulating plate 600' may maintain insulation between the cap assembly 300' and the electrode assembly 100.

A second lead tab 700' led out from (or extending from) the second electrode of the electrode assembly 100 may be electrically connected and fixed to the case 200' (e.g., to the bottom portion 220' of the case 200').

A second insulating plate 800' may be located between the electrode assembly 100 and the bottom portion 220' of the case 200', and the second insulating plate 800' may have a tab opening through which the second lead tab 700' is led out. The bottom portion 220' of the case 200' is electrically connected to the second electrode via the second lead tab 700' and may face the electrode assembly 100 with the second insulating plate 800' interposed therebetween. The second insulating plate 800' may maintain insulation between the bottom portion 220' of the case 200' and the electrode assembly 100.

As is apparent from the above description, according to embodiments of the present disclosure, in a winding-type electrode assembly, because a first electrode substrate, a first separator, and a second separator extend to be longer by at least one turn (e.g., about 360°) than points thereof corresponding to a distal end of a second electrode plate, the electrode assembly may be completely surrounded and protected by the first electrode substrate and the first and second separators in the peripheral area thereof. Therefore, even when electrode plates expand during charging/discharging, a first electrode active material layer and a second electrode active material layer located relatively inward of the electrode assembly may not crack.

Furthermore, because heat or impact applied from the outside is absorbed by the first electrode substrate and the first and second separators, safety may be improved. Furthermore, because the first and second separators may be impregnated with an electrolyte in the peripheral area, a passage for movement of the electrolyte may be provided, and therefore, the electrolyte may not be collected in the peripheral area.

The above detailed description describes only some embodiments of an electrode assembly and a secondary battery including the same according to the present disclosure, the present disclosure is not limited to the above embodiments. It is to be understood by those skilled in the art that various modifications can be made without departing from the present disclosure as claimed in the following claims and their equivalents.

## Claims

1. An electrode assembly (100) comprising:
a first electrode plate (110) comprising a first electrode substrate (111) having a first electrode active material layer (112) thereon;
a first separator (120);
a second electrode plate (130) comprising a second electrode substrate (131) having a second electrode active material layer (132) thereon; and
a second separator (140),
wherein the first electrode plate (110), the first separator (120), the second electrode plate (130), and the second separator (140) are sequentially stacked and wound about a winding axis, and
wherein the first electrode substrate (111), the first separator (120), and the second separator (140) extend at least one turn beyond a distal end (130a) of the second electrode plate (130) in the wound electrode assembly (100).

2. The electrode assembly (100) as claimed in claim 1, wherein the first electrode substrate (111), the first separator (120), and/or the second separator (140) extend in a range of 1 to 1.5 turns beyond the distal end (130a) of the second electrode plate (130), and/or
wherein the first electrode substrate (111), the first separator (120), and/or the second separator (140) extend in a range of 360° to 540° beyond the distal end (130a) of the second electrode plate (130).

3. The electrode assembly (100) as claimed in claim 1 or 2, wherein the first electrode substrate (111) extends beyond at least one of distal ends (120a, 140a) of the first and second separators (120, 140).

4. The electrode assembly (100) as claimed in any one of claims 1 to 3, wherein the first electrode substrate (111) extends 0.5 turns or less beyond at least one of distal ends (120a, 140a) of the first and second separators (120, 140), and/or
wherein the first electrode substrate (111) extends 180° or less beyond at least one of distal ends (120a, 140a) of the first and second separators (120, 140).

5. The electrode assembly (100) as claimed in any one of claims 1 to 4, wherein a distal end of the second electrode active material layer (132) coincides with a distal end of the second electrode substrate (131) and/or with a distal end (112a) of the first electrode active material layer (112).

6. The electrode assembly (100) as claimed in any one of claims 1 to 5, wherein the first electrode active material layer (112) extends 5 mm to 15 mm beyond the distal end (130a) of the second electrode plate (130).

7. The electrode assembly (100) as claimed in any one of claims 1 to 6, wherein the second electrode active material layer (132) is on both surfaces of the second electrode substrate (131).

8. The electrode assembly (100) as claimed in any one of claims 1 to 7, wherein the first electrode active material layer (112) is on both surfaces of the first electrode substrate (111), and
wherein, in a last turn section of the first electrode active material layer (112), the first electrode active material layer (112) is on only one surface of the first electrode substrate (111) facing an inside of the electrode assembly (100), and/or
wherein, in a last 360° section of the first electrode active material layer (112), the first electrode active material layer (112) is on only one surface of the first electrode substrate (111) facing an inside of the electrode assembly (100).

9. The electrode assembly (100) as claimed in any one of claims 1 to 8, wherein a distal end (120a) of the first separator (120) coincides with a distal end (140a) of the second separator (140).

10. The electrode assembly (100) as claimed in any one of claims 1 to 9, wherein, in a portion of the electrode assembly (100), the first electrode substrate (111), the first separator (120), the second separator (140), and the first electrode substrate (111) are sequentially arranged in that order from an outside of the electrode assembly (100) when viewed in longitudinal section passing through the winding axis and distal ends (120a, 140a) of the first and second separators (120, 140).

11. The electrode assembly (100) as claimed in any one of claims 1 to 10, wherein the second electrode plate (130) is surrounded by the first electrode substrate (111), the first separator (120), and the second separator (140), and/or
wherein an outer circumferential surface of the electrode assembly (100) is surrounded by the first electrode substrate (111).

12. The electrode assembly (100) as claimed in any one of claims 1 to 11, further comprising a finishing tape (150) fixing a distal end (111a) of the first electrode substrate (111).

13. The electrode assembly (100) as claimed in claim 12, wherein the finishing tape (150) comprises polyethylene terephthalate.

14. The electrode assembly (100) as claimed in claim 12 or 13, wherein the finishing tape (150) has a thickness in a range of 15 µm to 20 µm.

15. A secondary battery comprising:
the electrode assembly (100) as claimed in any one of claims 1 to 14;
a case (200, 200') accommodating the electrode assembly (100) and electrically connected to the first electrode plate (110) of the electrode assembly (100);
a cap coupled to the case (200, 200'); and
a terminal (700) electrically connected to the second electrode plate (130) of the electrode assembly (100).
